# EUROPEAN PATENT SPECIFICATION

(11) **EP 2 584 212 B1**
(45) Date of publication and mention of the grant of the patent: **05.08.2015**
(21) Application number: 12186018.3
(22) Date of filing: 26.09.2012
(51) Int. Cl.: F16D 65/18, F16D 65/56, F16D 66/02

(54) **Mechanical arresting disk brake**
Mechanisch arretierende Scheibenbremse
Frein à disque d'arrêt mécanique

(30) Priority: 17.10.2011 JP 2011227814
(43) Date of publication of application: 24.04.2013
(73) Proprietor: Nissin Kogyo Co., Ltd., Ueda-shi Nagano 386-0016 (JP); Yamaha Motor Co., Ltd., Shizuoka-ken 438-0025 (JP)
(72) Inventor: Naitou, Tetsuya, Nagano-ken, 386-0016 (JP); Tezuka, Toshihiro, Nagano-ken, 386-0016 (JP); Hombo, Yoshihisa, Shizuoka-ken, 438-0025 (JP)
(74) Representative: Isarpatent

(56) References cited:
- FR-A1- 2 356 845
- JP-A- 2002 206 576
- US-A- 6 059 074
- US-A1- 2006 076 195
- US-B1- 6 390 244

## Description

The present invention relates to a mechanical arresting disc brake according to the preamble of claim 1 which is known from JP 2002 206 576 A.

FR 2 356 845 A1 discloses an indicator device for determining during braking whether the brake clearance at the friction pad and disc rotor has widened to more than a predetermined amount.

Conventionally, as indicated in JP 2002 206576 A, mechanical arresting disk brakes are known wherein a braking action is performed via an adjustment bolt when a mechanical arresting lever mounted to a calliper body is rotated using a brake wire or the like, and wherein, when the braking action is released, the mechanical arresting lever is restored by the restoring force of a return spring provided under reversible compression between the mechanical arresting lever and the calliper body, thereby releasing the clamping of the disk rotor by friction pads via the adjustment bolt.

Furthermore, if due to use over a certain period the friction pad lining has worn down such that the brake clearance at the friction pads and disk rotor has become larger than a reference value, it is practice to adjust the brake clearance at the friction pads and disk rotor to a dimension less than the reference value by releasing a lock nut and turning the adjustment bolt to push the friction pads toward the disk rotor.

However, with the mechanical arresting disk brake according to JP 2002 206576 A, it has been difficult to identify the time when to adjust the brake clearance at the friction pads and disk rotor to a dimension less than the reference value. Therefore, methods have been used such as adjusting the brake clearance at the friction pads and disk rotor to a dimension less than the reference value every time a certain distance has been travelled, or performing the adjustment upon notification by the automobile user. However, these methods are not accurate in knowing the brake clearance at the friction pads and disk rotor.

### Disclosure of the Invention

It is an object of the present invention to solve the above-described problem by determining the time for adjustment of the brake clearance at the friction pads and disk rotor visually from the outside in an easy way, in order to enable accurate vehicle braking, and to avoid performing unnecessary adjustment work at times when no adjustment is needed, or missing a time when adjustment is needed.

In order to solve the above-described problem, the present invention as defined in independent claim 1 selects as technological basis a mechanical arresting disk brake comprising an adjustment mechanism for adjusting a brake clearance between a friction pad and a side face of a disk rotor to be adjusted by turning an adjustment bolt mounted on a calliper body, a mechanical arresting lever for effecting rotation of a piston formed integrally with the adjustment bolt, and a mechanical arresting mechanism that causes braking when the mechanical arresting lever is pulled.

Additionally, an indicator device for determining during braking whether the brake clearance at the friction pad and disk rotor has widened to more than a predetermined amount is provided on the calliper body and the mechanical arresting lever. In this way, by comprising the indicator device for determining during braking whether the brake clearance at the friction pad and disk rotor has widened to more than the predetermined amount, the invention enables the adjustment mechanism to be adjusted at the most suitable point in time.

According to the invention, the indicator device has a boundary display displayed at a given adjustment position at an outer surface of the calliper body. It moreover has a match display coupled to the mechanical arresting lever and formed, separated by an alignment clearance from the boundary display, on the mechanical arresting lever at a calliper body side end of the mechanical arresting lever. This configuration enables to determine, by confirming the position of the match display and boundary display during braking, that the brake clearance at the friction pad and disk rotor has widened to more than the predetermined amount if the match display has surpassed the boundary display or the distance between the match display and the boundary display has become smaller than a predetermined distance.

The boundary display may be formed on the outer surface of the calliper body as a confirmation mark or indicating needle. Also, the match display may be formed at the calliper body side end of the mechanical arresting lever as a confirmation mark or indicating needle.

The present invention, due to being configured as described above, enables accurate vehicle braking through visually confirming the time for adjusting the brake clearance at friction pads and disk rotor from the outside in an easy way, to correct the brake clearance at the friction pads and disk rotor to a reference dimension at a point in time when such is considered necessary, together with avoiding to perform unnecessary adjustment work at times when no adjustment is needed, or missing a time when adjustment is needed. Further, it also enables to easily realise the time for replacing friction pads.

### Brief Explanation of the Drawings

- Figure 1: Perspective view showing an exemplary embodiment of the invention
- Figure 2: Cross-sectional view along A-A in Fig. 1

### Detailed Description

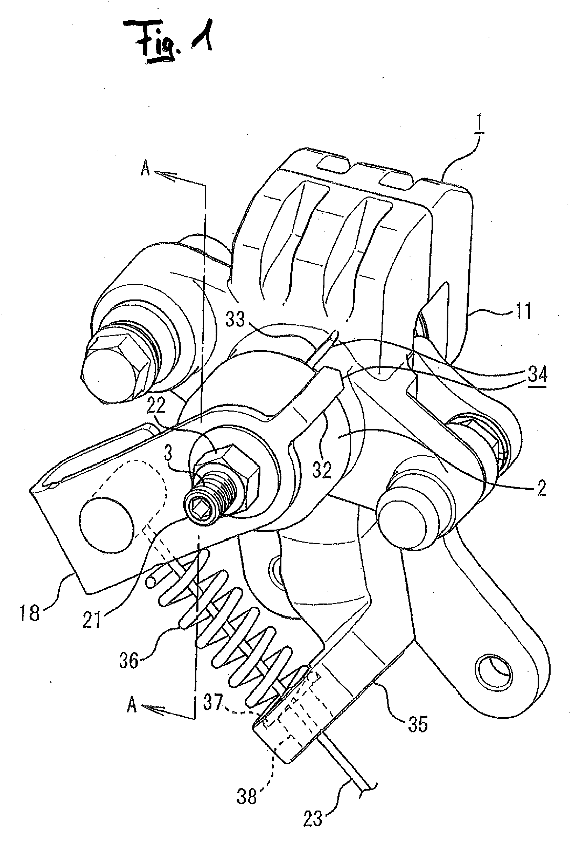

To explain an exemplary embodiment of the present invention in line with Fig. 1, the underlying technology is that of a mechanical arresting disk brake comprising, (1) being a calliper body, an adjustment mechanism (10) that enables the brake clearance (7) (8) between friction pads (5) (6) and the side faces of a disk rotor (4) to be adjusted by turning an adjustment bolt (3) mounted on an action part (2) side, a mechanical arresting lever (18) for effecting rotation of a piston (20) formed integrally with the adjustment bolt (3), and a mechanical arresting mechanism that is caused to brake when the mechanical arresting lever (18) is pulled.

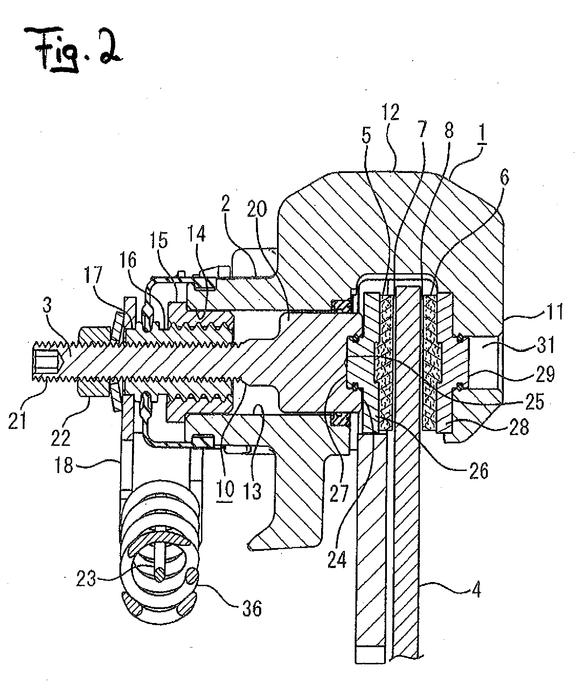

To explain the present embodiment in more detail, as shown in Fig. 2, the calliper body (1) consists of an action part (2) and a reaction part (11) provided on both sides of the disk rotor (4), as well as a bridge part (12) that connects the action part (2) and reaction part (11) across the disk rotor (4). Internally, on the action part (2) side of the disk rotor (4), a cylinder bore (13) is formed as shown in Fig. 2.

Furthermore, inside an opening portion (14) on the action part (2) side of the cylinder bore (13), a tubular sleeve nut (15) having an internal thread is inserted and fixedly arranged. Within the sleeve nut (15), a tubular screw member (16) having an external thread screw-threadedly engageable to the internal thread is arranged by being screwed into the internal thread of the sleeve nut (15), the arrangement being such that one end (17) of the screw member (16) protrudes from the sleeve nut (15) to the outside.

At the one end (17) of the screw member (16), the mechanical arresting lever (18) is mounted to be rotatable jointly with the screw member (16), while the adjustment bolt (3) is insertedly arranged in the screw member (16). That is, within the screw member (16) an internal thread is formed, and the screw member (16) and adjustment bolt (3) are assembled by screwing an external thread formed at the peripheral surface of the adjustment bolt (3) into this internal thread.

The adjustment bolt (3), with the piston (20) for pressing the friction pad (5) on the action part (2) side being formed integrally as part of the adjustment bolt (3), has its rear end (21) on the side opposing the piston (20) arrangement side arranged protruding from the screw member (16) to the outside. By forming in this way the adjustment bolt (3) integrally as part of the piston (20), the structure of the mechanical arresting disk brake is enabled to be simplified due to a reduction in the number of components over conventional products where adjustment bolt (3) and piston (20) are formed separately in order to be assembled, such that achieving low manufacturing cost becomes possible.

Furthermore, by screwing a lock nut (22) onto the rear end (21) side of the adjustment bolt (3) to fasten the screw member (16) and the mechanical arresting lever (18), the adjustment bolt (3), screw member (16), and mechanical arresting lever (18) are fixedly connected such as to be enabled to rotate as a whole. The tip of the mechanical arresting lever (18) has one end of a brake wire (23) connected to it, with the other end of the brake wire (23) being coupled to a brake operator for operation by the driver, such as a brake pedal or brake lever.

At the tip surface (24) of the piston (20), an engagement recess (25) having a circular base and U-shaped cross section is concavely provided. A cylindrical engagement protrusion (27) engageable with the engagement recess (25) is formed on a backing plate (26) of the piston (20) side friction pad (5), the engagement protrusion (27) being connected to the engagement recess (25) via a C-clip or similar coupling in such a way that the piston (20) and friction pad (5) are rotatable independently of one another while in a condition difficult to separate. The friction pad (6) installed on the reaction part (11) of the calliper body (1) also has an engagement protrusion (29) formed on its backing plate (28), which is connected to an engagement recess (31) of the calliper body (1) via a C-clip or similar coupling for mutually independent rotatability in a condition difficult to separate. Besides, the friction pads (5) (6) comprise a circular disk shape as their overall shape. Consequently, there is no need to consider the orientation of mounting, which enables the assembling properties to be improved.

A match display (32) such as an indicating needle fixedly projects from the calliper body (1) side of the mechanical arresting lever (18), with a boundary display (33) corresponding to the match display (32) being projectingly provided on the calliper body (1) surface, the match display (32) and boundary display (33) constituting a confirmation means (34). The match display (32) on the mechanical arresting lever (18) and the boundary display (33) on the calliper body (1) enable the moving position of the mechanical arresting lever (18) to be visually confirmed in operation of the mechanical arresting disk brake. For example, if the match display (32) revolves beyond the boundary display (33) when the mechanical arresting lever (18) is braked, it can be determined by eyesight that the friction pads (5) (6) have worn down such that the brake clearance (7) (8) between the disk rotor (4) and the friction pads (5) (6) has widened more than a predetermined amount, thereby enabling the brake clearance (7) (8) between the side faces of the disk rotor (4) and the friction pads (5) (6) to be adjusted by loosening the lock nut (22) and pushing the friction pads (5) (6) by advancing the adjustment bolt (3) inside the calliper body (1).

At a predetermined distance from the mechanical arresting lever (18), the calliper body (1) has a protruding retaining arm (35), with a return spring (36) being provided under compression between the retaining arm (35) and the mechanical arresting lever (18). The return spring (36) presses with one end against the mechanical arresting lever (18), its other end being pressed into an insertion recess (37) provided at the calliper body (1). Through the axial centre of the insertion recess (37), an insertion through hole (38) is formed through which the brake wire (23) is passed, together with passing the brake wire (23), which with one end is secured at the mechanical arresting lever (18), in axial direction through the return spring (36). The pressing of the return spring (36) into the insertion recess (37) is conducted with sufficient spring load to prevent disengagement from occurring. Besides, the verge of the insertion recess (37) opening is subjected to chamfering lest the return spring (36) be caught at a sharp edge of the opening at the time of installing the return spring (36) into the insertion recess (37).

In case of performing braking with a mechanical arresting disk brake configured as described above, due to the brake wire (23) being pulled by a brake pedal, brake lever, or similar brake operator operated by the driver, the mechanical arresting lever (18) is rotated in one direction against the restoring force of the return spring (36). Along with the rotation of the mechanical arresting lever (18), the adjustment bolt (3) and screw member (16), which are assembled to rotate as a whole with the mechanical arresting lever (18), rotate in the same direction as the mechanical arresting lever (18). In consequence, because the internal thread of the sleeve nut (15) causes the adjustment bolt (3) to be pushed out together with the screw member (16) toward the disk rotor (4), also the piston (20) formed integrally with the adjustment bolt (3), as well as the action part (2) side friction pad (5) connected to the tip of the piston (20), rotatingly slide toward the side of the disk rotor (4).

Then, due to the friction pad (5) sliding toward the side of the disk rotor (4) as described before, the surface of the friction pad (5) comes into surface contact with the surface of the disk rotor (4). Also, the reaction force accompanying the movement of the action part (2) side friction pad (5) causes the calliper body (1) to move into the direction opposite to the movement direction of the piston (20), such that due to the movement of the calliper body (1) the reaction part (11) side friction pad (6) moves toward the disk rotor (4) and is pressed against the reaction part (11) side face of the disk rotor (4). Thus, the pair of friction pads (5) (6) respectively provided on the action part (2) side and the reaction part (11) side as shown in Fig. 2 presses against both faces of the disk rotor (4), thereby performing the braking action of the mechanical arresting disk brake.

Next, to explain the release of the braking action in the following, by releasing the pull on the brake wire (23) e.g. through operation of the brake operator by the driver, due to the restoring force of the return spring (36) inserted under compression between the mechanical arresting lever (18) and the calliper body (1), their initial position before the commencement of the braking is restored. As a result, the adjustment bolt (3) and piston (20) together with the screw member (16) rotate in the direction opposite to when braking, sliding in the direction away from the disk rotor (4). At this time, because the piston (20) is made rotatable independently of the friction pads (5) (6), the piston (20) is enabled to be rotated in the reverse direction with ease.

The restoration of the return spring (36) is executed in a state where the return spring (36) presses with one end against the mechanical arresting lever (18) while its other end is pressed into the insertion recess (37) provided at the calliper body (1). Therefore, it does not happen that the return spring (36) changes position or generates wobbling. Because the return spring (36) is reliably positioned in a fixed position, it has a stable spring load, and also does not cause interference with the brake wire (23) running through its axial centre.

By causing as described above the piston (20) to slide in the direction away from the disk rotor (4), the friction pads (5) (6) connected to the piston (20) are enabled to be forced to slide in the direction away from the disk rotor (4). Therefore, the problem that during release of the braking the friction pads (5) (6) are dragged to the disk rotor (4) side becomes unlikely to occur. Also, the reaction force accompanying the movement of the action part (2) side friction pad (5) causes the calliper body (1) to move in such a way that the reaction part (11) side friction pad (6) moves to the side opposite from the disk rotor (4). As a result, because both the friction pads (5) (6) on the action part (2) side and the reaction part (11) side move to the side opposite from the disk rotor (4), the braking action of the mechanical arresting disk brake is enabled to be released smoothly.

Furthermore, if due to use over a certain period the friction pads (5) (6) have worn down such that the brake clearance (7) (8) at the time of non-use of the mechanical arresting disk brake has widened, upon braking the mechanical arresting lever (18) the adjustment bolt (3) is conveyed inward to the disk rotor (4) by the amount of the widened brake clearance (7) (8). Therefore, if the match display (32) revolves beyond the boundary display (33) upon braking the mechanical arresting lever (18), it can be determined that the friction pads (5) (6) have worn down to the extent that the brake clearance (7) (8) at which the disk rotor (4) and the friction pads (5) (6) are facing has widened to more than a predetermined value, thereby enabling the brake clearance (7) (8) between the side faces of the disk rotor (4) and the friction pads (5) (6) to be adjusted by loosening the lock nut (22) and pushing the friction pads (5) (6) by advancing the adjustment bolt (3) inside the calliper body (1). It shall be added that while in the above embodiment a match display (32) such as an indicating needle on the mechanical arresting lever (18) and a boundary display (33) such as a confirmation mark on the calliper body (1) have been provided as the confirmation means (34), this may be reversed by providing a boundary display such as a confirmation mark on the mechanical arresting lever (18) and a match display such as an indicating needle on the calliper body (1).

### Explanation of reference signs

- 1: calliper body
- 3: adjustment bolt
- 4: disk rotor
- 5: friction pad
- 6: friction pad
- 7: brake clearance
- 8: brake clearance
- 10: adjustment mechanism
- 18: mechanical arresting lever
- 32: match display
- 33: boundary display

## Claims

1. A mechanical arresting disk brake comprising:
an adjustment mechanism (10) for adjusting a brake clearance (7,8) between a friction pad (5,6) and a side face of a disk rotor (4) by turning an adjustment bolt (3) mounted on a calliper body (1),
a mechanical arresting lever (18) for effecting rotation of a piston (20) formed integrally with the adjustment bolt (3), and
a mechanical arresting mechanism that causes braking when the mechanical arresting lever (18) is pulled,
**characterised in that**
an indicator device for determining during braking whether the brake clearance (7,8) at the friction pad (5,6) and disk rotor (4) has widened to more than a predetermined amount is provided on the calliper body (1) and the mechanical arresting lever (18); and
the indicator device has a boundary display (33) displayed at a given adjustment position at an outer surface of the calliper body (1), as well as a match display (32) coupled to the mechanical arresting lever (18) and formed, separated by an alignment clearance from the boundary display (33), on the mechanical arresting lever (18) at a calliper body (1) side end of the mechanical arresting lever (18), to determine whether the brake clearance (7,8) at the friction pad (5,6) and disk rotor (4) has widened to more than the predetermined amount by confirming a position of the match display (32) and boundary display (33) during braking.

2. The mechanical arresting disk brake according to claim 1, wherein the boundary display (33) is formed on the outer surface of the calliper body (1) as a confirmation mark or indicating needle.

3. The mechanical arresting disk brake according to claim 1, wherein the match display (32) is formed at the calliper body (1) side end of the mechanical arresting lever (18) as a confirmation mark or indicating needle.

## Patentansprüche

1. Mechanische Arretierscheibenbremse, die Folgendes umfasst:
- einen Justiermechanismus (10) zum Justieren eines Bremsenspiels (7, 8) zwischen einem Bremsklotz (5, 6) und einer Seitenfläche eines Scheibenrotors (4) durch Drehen eines Justierbolzens (3), der an einem Bremssattelkörper (1) montiert ist,
- einen mechanischen Arretierhebel (18) zum Herbeiführen einer Rotation eines Kolbens (20), der integral mit dem Justierbolzen (3) ausgebildet ist, und
- einen mechanischen Arretiermechanismus, der eine Bremsung bewirkt, wenn der mechanische Arretierhebel (18) gezogen wird,
**dadurch gekennzeichnet, dass**
eine Indikatorvorrichtung, die dazu dient, während des Bremsens zu bestimmen, ob sich das Bremsenspiel (7, 8) an dem Bremsklotz (5, 6) und dem Scheibenrotor (4) um mehr als einen zuvor festgelegten Betrag vergrößert hat, an dem Bremssattelkörper (1) und dem mechanischen Arretierhebel (18) angeordnet ist; und
die Indikatorvorrichtung einen Grenzanzeiger (33) aufweist, der an einer bestimmten Justierposition an einer Außenfläche des Bremssattelkörpers (1) angezeigt wird, sowie einen Übereinstimmungsanzeiger (32) aufweist, der mit dem mechanischen Arretierhebel (18) gekoppelt ist und, um ein Ausrichtungsspiel von dem Grenzanzeiger (33) getrennt, an dem mechanischen Arretierhebel (18) am Bremssattelkörper (1)-seitigen Ende des mechanischen Arretierhebels (18) ausgebildet ist, um zu bestimmen, ob sich das Bremsenspiel (7, 8) an dem Bremsklotz (5, 6) und dem Scheibenrotor (4) um mehr als den zuvor festgelegten Betrag vergrößert hat, indem eine Position des Übereinstimmungsanzeigers (32) und des Grenzenanzeigers (33) während des Bremsens bestätigt wird.

2. Mechanische Arretierscheibenbremse nach Anspruch 1, wobei der Grenzanzeiger (33) an der Außenfläche des Bremssattelkörpers (1) als eine Bestätigungsmarke oder eine Anzeigenadel ausgebildet ist.

3. Mechanische Arretierscheibenbremse nach Anspruch 1, wobei der Übereinstimmungsanzeiger (32) am Bremssattelkörper (1)-seitigen Ende des mechanischen Arretierhebels (18) als eine Bestätigungsmarke oder eine Anzeigenadel ausgebildet ist.

## Revendications

1. Frein à disque d'arrêt mécanique, comprenant :
- un mécanisme d'ajustement (10) destiné à ajuster un jeu de frein (7, 8) entre une plaquette de frein (5, 6) et une face latérale d'un rotor à disque (4) en tournant un boulon d'ajustement (3) monté sur un corps de pied à coulisse (1),
- un levier d'arrêt mécanique (18) destiné à effectuer la rotation d'un piston (20) formé d'un seul tenant avec le boulon d'ajustement (3), et
- un mécanisme d'arrêt mécanique qui entraîne le freinage lorsque le levier d'arrêt mécanique (18) est tiré,
**caractérisé en ce qu'**
un dispositif indicateur destiné à déterminer, durant le freinage, si le jeu de frein (7, 8) au niveau de la plaquette de frein (5, 6) et du rotor à disque (4) a augmenté de plus d'une quantité prédéterminée, est prévu sur le corps de pied à coulisse (1) et le levier d'arrêt mécanique (18) ; et
le dispositif indicateur présente un affichage de limite (33) affiché sur une position d'ajustement donnée au niveau d'une surface extérieure du corps de pied à coulisse (1), ainsi qu'un affichage de correspondance (32) couplé au levier d'arrêt mécanique (18) et formé, séparé de l'affichage de limite (33) par un jeu d'ajustement, sur le levier d'arrêt mécanique (18) au niveau d'une extrémité latérale de corps de pied à coulisse (1) du levier d'arrêt mécanique (18), afin de déterminer si le jeu de frein (7, 8) au niveau de la plaquette de frein (5, 6) et du rotor à disque (4) a augmenté de plus de la quantité prédéterminée en confirmant une position de l'affichage de correspondance (32) et de l'affichage de limite (33) durant le freinage.

2. Frein à disque d'arrêt mécanique selon la revendication 1, dans lequel l'affichage de limite (33) est formé sur la surface extérieure du corps de pied à coulisse (1) sous la forme d'une marque de confirmation ou d'une aiguille indicatrice.

3. Frein à disque d'arrêt mécanique selon la revendication 1, dans lequel l'affichage de correspondance (32) est formé au niveau de l'extrémité latérale de corps de pied à coulisse (1) du levier d'arrêt mécanique (18) sous la forme d'une marque de confirmation ou d'une aiguille indicatrice.
